# FASCICULE DE BREVET EUROPEEN

(11) **EP 4 566 119 B1**
(45) Date de publication et mention de la délivrance du brevet: **04.11.2026**
(21) Numéro de dépôt: 23738546.3
(22) Date de dépôt: 05.07.2023
(51) Int. Cl.: H01M 50/50, H01M 50/517, H01M 50/591, H01M 50/593

(54) **DISPOSITIF D'ISOLATION ÉLECTRIQUE POUR BARRE D'INTERCONNEXION**
ELEKTRISCHE ISOLIERUNGSVORRICHTUNG FÜR SAMMELSCHIENE
ELECTRICAL INSULATION DEVICE FOR BUSBAR

(30) Priorité: 02.08.2022 FR 2208024
(43) Date de publication de la demande: 11.06.2025
(73) Titulaire: Ampere SAS, 92100 Boulogne-Billancourt (FR)
(72) Inventeur: BORIE, Julien, 78280 Guyancourt (FR); GAUTIER, Fabien, 78280 Guyancourt (FR)
(74) Mandataire: Renault Group
(86) Numéro de dépôt international: PCT/EP2023/068513
(87) Numéro de publication internationale: WO 2024/028026

(56) Documents cités:
- CN-U- 213 026 377
- US-A1- 2012 103 684
- US-A1- 2022 181 747

## Description

L'invention concerne un dispositif d'isolation électrique pour barre d'interconnexion et un ensemble d'isolation comprenant un tel dispositif. Notamment, la barre d'interconnexion considérée est destinée à un véhicule, tel qu'un véhicule électrique ou hybride. L'invention porte, en outre, sur un procédé d'installation d'un ensemble d'isolation selon l'invention.

Classiquement, les barres d'interconnexion, aussi connues sous le nom de « busbar », servent à relier entre eux différent modules d'un dispositif de stockage d'énergie électrique, aussi qualifié de batterie ou « pack battery ».

Dans le domaine automobile en particulier, de telles barres d'interconnexions sont utilisées afin de relier électriquement entre eux une pluralité de modules de sorte à former un dispositif de stockage d'énergie électrique apte à alimenter en énergie électrique une chaîne de transmission d'un véhicule électrique ou hybride. L'utilisation de barres d'interconnexion permet ainsi d'additionner les capacités de stockage et de puissance de modules distincts.

Néanmoins, les barres d'interconnexions sont conductrices de hautes tensions, pouvant, par exemple, être de l'ordre de 400V. Il est donc primordial de protéger tout technicien ou utilisateur susceptible d'intervenir sur le dispositif de stockage, notamment tout personnel en charge de son montage ou de son démontage. En particulier, dans un tel contexte, la norme d'isolation électrique IPXXB, visant à empêcher le contact entre le doigt d'un utilisateur et une partie sous haute tension, doit être respectée.

A cette fin, tel que divulgué dans la demande internationale WO2021/045395, il est connu de disposer des boîtiers isolants autour des composants et/ou zones sous tension. Un tel principe peut néanmoins s'avérer complexe au niveau de portions extrêmales des barres d'interconnexion, disposées en contact avec des bornes des modules, au niveau desquelles les barres d'interconnexions sont fixées, particulièrement vissées au moyen de vis, sur lesdits modules. Il est alors nécessaire que de telles portions extrêmales soient accessibles.

En ce sens, il est connu de mettre en œuvre des boîtiers isolants comprenant des clapets, ou couvercles, rabattables, tels qu'enseignés dans les documents CN213026377, US2022181747 et US2012103684. De tels boîtiers présentent cependant le désavantage d'être encombrants, et sont inadaptés pour une utilisation dans un environnement restreint du fait de l'espace requis pour permettre l'ouverture et la fermeture des clapets.

L'invention s'inscrit dans ce contexte et vise à fournir un dispositif d'isolation électrique pour barre d'interconnexion remédiant aux inconvénients ci-dessus. En particulier, l'invention vise à proposer un dispositif d'isolation électrique compacte et simple d'utilisation.

L'invention concerne un dispositif d'isolation électrique pour barre d'interconnexion comprenant un support en matériau électriquement isolant configuré pour recouvrir une barre d'interconnexion et au moins un capot électriquement isolant, amovible, rapporté sur le support:
- le support comprenant au moins un orifice, apte à s'étendre en regard d'au moins un moyen de fixation d'une barre d'interconnexion, et une rainure de guidage de l'au moins un capot ;
- l'au moins un capot comprenant un corps et étant monté coulissant sur le support par l'intermédiaire d'au moins un organe de guidage, relié au corps, de sorte à pouvoir être déplacé dans la rainure de guidage entre une première position, dans laquelle l'au moins un orifice est dégagé, et une deuxième position dans laquelle l'au moins un orifice est recouvert par le corps.

Notamment, l'organe de guidage peut comprendre :
- un organe de retenue du capot relativement au support, l'organe de retenue comprenant une portion déformable, notamment en clip, configurée pour coopérer avec au moins un bord de la rainure de guidage de sorte à prévenir le déplacement du capot relativement au support le long d'au moins une direction ; et/ou
- au moins un organe de positionnement du capot dans au moins l'une de la première ou de la deuxième position, la rainure de guidage comprenant au moins un élément de positionnement, tel qu'un retrait, de forme complémentaire dudit organe de positionnement, délimitant ladite position.

Le corps de l'au moins un capot peut comprendre un organe de préhension disposé sur un côté extrêmal du corps et configuré pour s'étendre en saillie du support le long d'au moins une direction.

Particulièrement, le dispositif d'isolation peut comprendre une pluralité de capots. Le support comprend alors une pluralité de rainures de guidage, chacune desdites rainures étant configurée pour coopérer avec l'un des capots de la pluralité de capots.

Selon une option de réalisation, le support peut comprend au moins une paroi et au moins une portion amovible rapportée, configurée pour être fixée sur l'au moins une paroi, ladite portion amovible comprenant l'au moins un orifice et la rainure de guidage de l'au moins un capot.

Egalement, le support peut comprendre une fente de détrompage, traversante dans une épaisseur du support et débouchant dans l'au moins un orifice, le capot comprenant un moyen de détrompage s'étendant en saillie du corps et configuré pour coopérer avec la fente de détrompage de sorte à s'étendre au travers de celle-ci et en saillie du support.

De manière avantageuse, le dispositif d'isolation peut, en outre, comprendre un marquage disposé sur le support et indicatif d'un positionnement adapté ou non de l'au moins un capot, le capot étant configuré pour recouvrir au moins en partie ledit marquage selon qu'il est dans la première position ou la deuxième position.

L'invention concerne également un ensemble d'isolation électrique pour une barre d'interconnexion comprenant un dispositif d'isolation selon l'invention et une barre d'interconnexion.

L'ensemble d'isolation électrique peut, en outre, comprendre au moins un moyen de fixation, disposé en regard de l'au moins un orifice et monté sur la barre d'interconnexion, le moyen de fixation étant une vis imperdable.

L'ensemble d'isolation électrique peut également être configuré de sorte que :
- le support est surmoulé sur la barre d'interconnexion ; ou
- l'ensemble d'isolation comprend, en outre, une embase électriquement isolante configurée pour coopérer avec le support , l'embase s'étendant au moins d'un côté de la barre d'interconnexion et le support s'étendant au moins d'un côté opposé de la barre d'interconnexion relativement à l'embase.

L'invention peut également s'étendre à un capot pour dispositif d'isolation électrique d'une barre d'interconnexion tel qu'exposé précédemment, le capot étant réalisé dans un matériau isolant et comprenant :
- un corps, notamment plan ou sensiblement plan ;
- au moins un organe de guidage relié au corps et s'étendant en saillie de celui-ci, l'organe de guidage étant configuré pour coopérer et être déplacé relativement à un support, être déplacé dans la rainure de guidage entre une première position.

L'invention concerne enfin un procédé d'installation d'un ensemble d'isolation électrique selon l'invention comprenant le positionnement de la barre d'interconnexion sur un module de dispositif de stockage d'énergie électrique, le positionnement d'au moins un moyen de fixation de sorte à fixer la barre d'interconnexion sur ledit module et le déplacement de l'au moins un capot depuis la première position vers la deuxième position par coulissement relativement au support.

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 est une représentation schématique d'un mode de réalisation d'un ensemble et d'un dispositif d'isolation électrique d'une barre d'interconnexion.
La figure 2 est une représentation schématique de l'ensemble et du dispositif d'isolation électrique d'une barre d'interconnexion.
La figure 3 est une représentation schématique en perspective de l'ensemble et du dispositif d'isolation électrique d'une barre d'interconnexion.
La figure 4 est une représentation schématique d'un exemple de réalisation alternatif de l'ensemble et du dispositif d'isolation électrique d'une barre d'interconnexion.
La figure 5 est une est une représentation schématique de moyens de fixation et d'un dispositif de détrompage compris dans l'ensemble d'isolation électrique.
La figure 6 est une représentation schématique d'un capot pour un ensemble d'isolation électrique.
La figure 7 est une représentation schématique en perspective du capot comprenant un organe de guidage.
La figure 8 est une représentation schématique en perspective du capot.
La figure 9 est une représentation schématique en coupe de l'ensemble d'isolation électrique.
La figure 10 est une représentation schématique du fonctionnement du dispositif de détrompage de l'ensemble d'isolation électrique.
La figure 11 est une représentation schématique du positionnement du capot dans l'ensemble d'isolation électrique.
La figure 12 est une représentation schématique d'un ensemble d'isolation électrique selon un premier mode de réalisation, comprenant une embase.
La figure 13 est une représentation schématique d'une option de réalisation d'un support du dispositif d'isolation électrique d'une barre d'interconnexion.

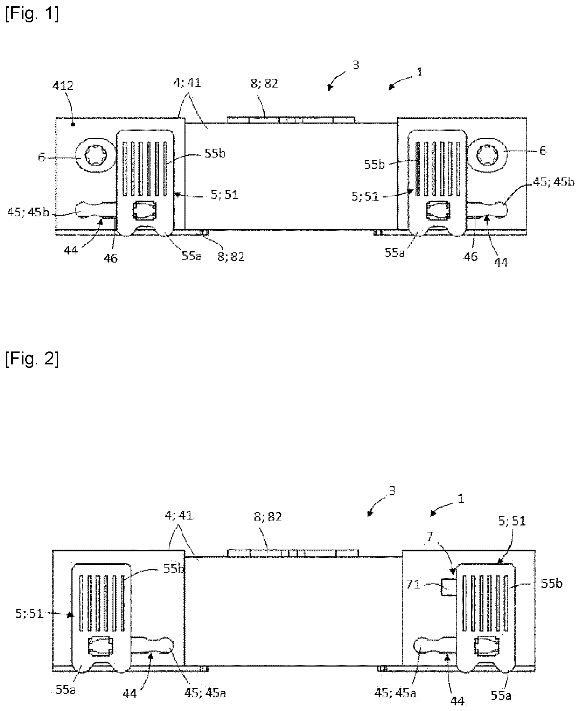

La figure 1 illustre schématiquement un exemple de réalisation d'un ensemble d'isolation 1 électrique pour une barre d'interconnexion 2, aussi qualifiée de « busbar ». L'ensemble d'isolation 1 électrique comprend notamment une barre d'interconnexion 2 et un dispositif d'isolation 3 électrique selon l'invention.

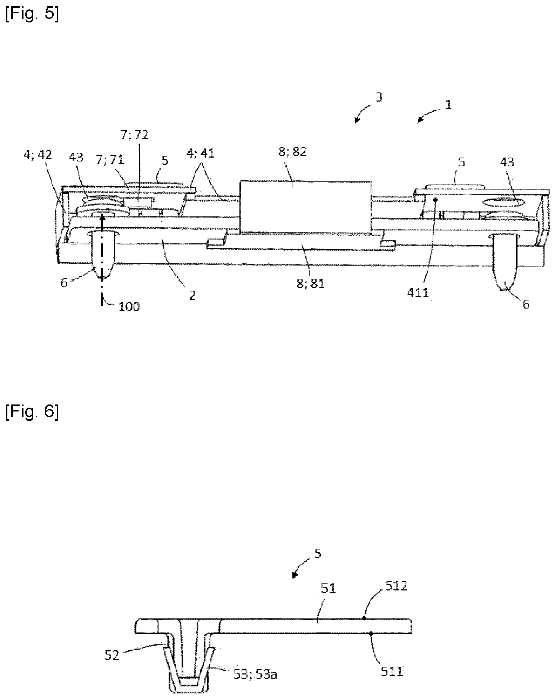

La barre d'interconnexion 2 peut être une barre droite, c'est-à-dire rectiligne, ou sensiblement droite, tel qu'illustré aux figures 5, 10 et 11. Alternativement, la barre d'interconnexion 2 peut être une barre courbée. Il est entendu que la description faite ci-après, en référence à un ensemble d'isolation 1 comprenant une barre d'interconnexion 2 droite ou en référence à un dispositif d'isolation 3 pour une barre d'interconnexion 2 droite, s'applique *mutatis mutandis* à une barre d'interconnexion 2 courbée.

Particulièrement, selon l'invention, la barre d'interconnexion 2 considérée peut être une barre d'interconnexion 2 destinée à relier électriquement des modules compris dans un dispositif de stockage d'énergie électrique, aussi appelé « batterie ». Notamment, le dispositif de stockage considéré est apte à alimenter en énergie électrique une chaîne de transmission d'un véhicule automobile. Le véhicule est notamment un véhicule à motorisation électrique ou hybride. Le véhicule considéré peut être de tout type, par exemple un véhicule particulier, un véhicule utilitaire, un camion ou un bus. Notamment, le véhicule peut être un véhicule connecté et/ou autonome.

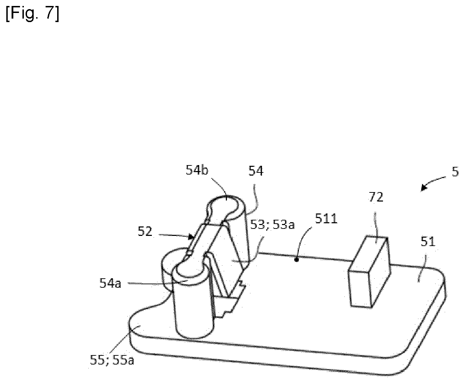

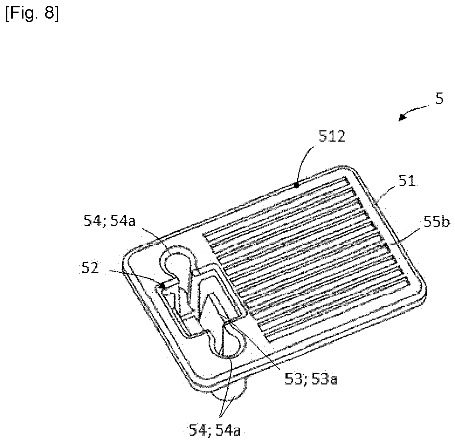

Les figures 1 à 12 illustrent des exemples de réalisation de modes de réalisation d'un ensemble d'isolation 1 ou d'un dispositif d'isolation 3 selon l'invention. Dans l'ensemble de la description ci-après, les termes « premier », « deuxième », « primaire », « secondaire », « principal » ont vocation à distinguer des composants similaires et non à définir une hiérarchie au sein de l'objet.

De manière générale, le dispositif d'isolation 3 pour barre d'interconnexion 2 selon l'invention comprend un support 4 configuré pour recouvrir la barre d'interconnexion 2 et au moins un capot 5 amovible, rapporté sur le support 4.

Le support 4 est réalisé dans un matériau isolant, notamment dans un matériau plastique tel que des polymères LCP, ou « polymères à cristaux liquides ». Le support 4 comprend une paroi principale 41 configurée pour recouvrir la barre d'interconnexion 2. Notamment, la paroi principale 41 est configurée pour être interposée entre la barre d'interconnexion 2 et la main d'un utilisateur le long d'une première direction 100. De manière préférentielle, la paroi principale 41 est au moins en partie plane, ou sensiblement plane.

Selon des alternatives de réalisation, davantage détaillées ci-après, la paroi principale 41 peut être réalisée d'un seul tenant ou peut être formée par une pluralité de pièces s'inscrivant dans un même plan, ou sensiblement dans un même plan.

Le support 4 forme notamment au moins un demi boîtier. De manière préférentielle, le support 4 comprend, en outre, une pluralité de parois latérales 42, issues de la paroi principale 41. Notamment, selon l'exemple de réalisation illustré, le support 4 comprend au moins trois parois latérales 42. Celles-ci s'étendent perpendiculairement, ou sensiblement perpendiculairement, à la paroi principale 41 de manière à entourer au moins en partie la barre d'interconnexion 2. Notamment, les parois latérales 42 sont agencées, au sein d'un dispositif de stockage, de sorte à entourer des zones de la barre d'interconnexion accessibles.

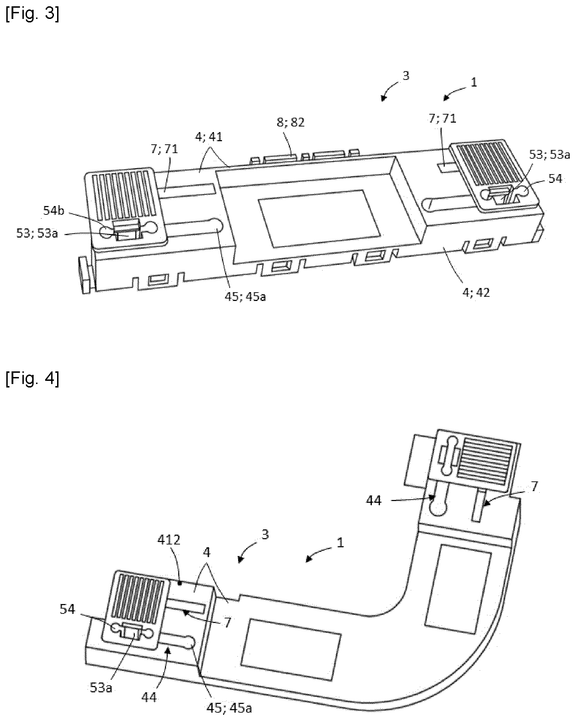

Le support 4 présente une forme adaptée à la barre d'interconnexion 2. Notamment, le support peut présenter une forme parallélépipédique ou sensiblement parallélépipédique dans le cas d'une barre d'interconnexion 2 droite, tel qu'illustré aux figures 1 à 3. A l'inverse, lorsque la barre d'interconnexion 2 présente une forme courbée, tel qu'exposé plus haut, le support peut présenter une forme courbée, tel qu'illustré à la figure 4.

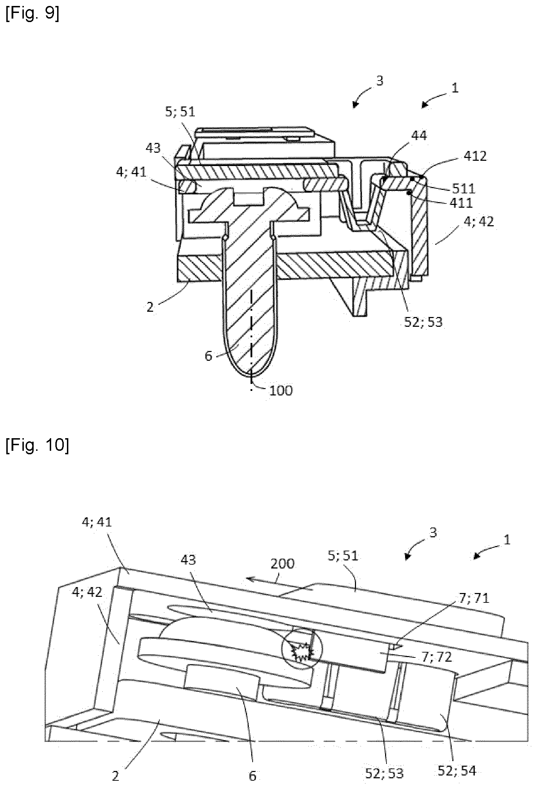

Le support 4 comprend au moins un orifice 43 traversant. L'au moins un orifice 43, tel que visible à la figure 5 ou 9, est disposé dans la paroi principale 41 de manière à s'étendre entre une première face 411, tournée vers la barre d'interconnexion 2, et une deuxième face 412, opposée à celle-ci.

L'au moins un orifice 43 est disposé de sorte à s'étendre en regard d'au moins un moyen de fixation 6, tel qu'une vis, de la barre d'interconnexion 2 lorsque ceux-ci sont assemblés au sein de l'ensemble d'isolation 1 ou au sein du dispositif de stockage d'énergie électrique. En l'espèce, l'au moins un orifice 43 est disposé en regard d'au moins un moyen de fixation 6 le long de la première direction 100. Une tête du moyen de fixation 6 et l'au moins un orifice 43 peuvent, de manière préférentielle, être centrés sur un même axe. L'au moins un orifice 43 permet ainsi de rendre le moyen de fixation 6 accessible au moyen d'un outil, tel qu'une visseuse, par exemple de sorte à le serrer dans le cas d'une vis.

De manière optionnelle, tel que davantage exposé ci-après, l'au moins un orifice 43 peut être dimensionné de sorte à présenter une dimension principale strictement inférieure à une dimension principale d'une tête du moyen de fixation 6 considéré. On entend par « dimension principale » une dimension la plus longue, mesurée le long d'une direction orthogonale à la première direction 100, de l'orifice 43. Une telle dimension principale peut, par exemple, correspondre à un diamètre dans le cas d'un orifice 43 circulaire, ou à une diagonale, dans le cas d'un orifice 43 polygonal.

Préférentiellement, le support 4 comprend un nombre d'orifices 43 égal au nombre de moyens de fixations 6 utilisés pour maintenir la barre d'interconnexion. Chaque orifice 43 est alors disposé de sorte à s'étendre en regard d'un moyen de fixation 6 qui lui est propre selon un principe similaire à celui exposé plus haut. En l'espèce, la barre d'interconnexion 2 est maintenue par deux moyens de fixation 6 et le support 4 comprend deux orifices 43.

En outre, le support 4 comprend au moins une rainure de guidage 44 de l'au moins un capot 5. Similairement, à l'orifice 43, l'au moins une rainure est traversante, c'est-à-dire qu'elle est disposée dans la paroi principale 41 de manière à s'étendre entre la première face 411 et la deuxième face 412. Selon l'exemple illustré, la rainure de guidage 44 peut être rectiligne ou sensiblement rectiligne. Selon une alternative non représentée, la rainure de guidage 44 peut être au moins partiellement courbée. Tel que davantage exposé ci-après, la rainure de guidage 44 est configurée pour recevoir au moins en partie le capot 5 de sorte à permettre le déplacement de ce dernier relativement au support 4.

L'ensemble d'isolation 1 pour une barre d'interconnexion 2 selon l'invention peut également être réalisé selon différents modes de réalisation.

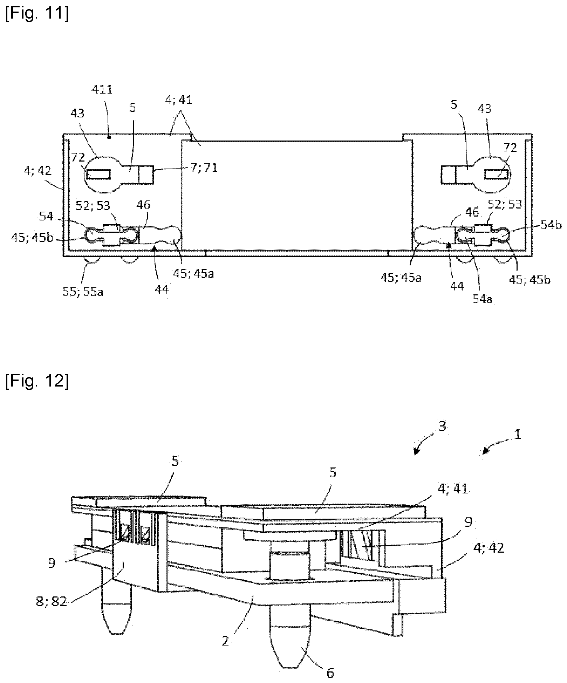

Selon un premier mode de réalisation, illustré à la figure 5 ou 12, l'ensemble d'isolation 1 peut, en outre, comprendre une embase 8 électriquement isolante, rapportée et configurée pour coopérer avec le support 4. Le support 4 et l'embase 8 forment alors chacun un demi-boitier dont la combinaison définit un boîtier, clos ou non, entourant au moins partiellement la barre d'interconnexion 2. Notamment, l'embase 8 peut être reliée au support 4 par l'intermédiaire d'au moins un élément de fixation 9, tel qu'une fixation en clip. L'embase 8 s'étend au moins d'un côté de la barre d'interconnexion 2 tandis que le support 4 s'étend au moins d'un côté opposé de la barre d'interconnexion 2 relativement à l'embase 8. Autrement dit, l'embase 8 et le support 4 sont au moins disposés de part et d'autre de la barre d'interconnexion 2 le long de la première direction 100.

Selon des alternatives de réalisation, l'embase 8 peut présenter un profil en « U » ou en « L ». Notamment, l'embase 8 comprend un flanc principal 81, s'étendant du côté opposé de la barre d'interconnexion 2 relativement à la paroi principale 41 du support 4. Le flanc principal 81 s'étend au contact de la barre d'interconnexion 2. L'embase 8 peut, en outre, comprendre un ou plusieurs flancs latéraux 82, reliés au flanc principal 81 et configurés pour coopérer avec au moins une paroi latérale 42 du support 4. L'embase 8 assure ainsi, indirectement, la liaison entre la barre d'interconnexion 2 et le support 4. Dans l'alternative illustrée, non limitatif, l'embase 8 présente un profil en « U » comprenant deux flancs latéraux 82.

De manière avantageuse, optionnelle, afin de simplifier le transport et le montage de l'ensemble d'isolation 1, celui-ci peut, en outre, comprendre au moins un moyen de fixation 6, disposé en regard de l'au moins un orifice 43 et monté sur la barre d'interconnexion 2.

Dans le cas d'un ensemble d'isolation 1 comprenant un support 4 surmoulé sur la barre d'interconnexion 2, l'ensemble peut comprendre un ou des moyen(s) de fixation amovible(s). L'orifice 43 configuré pour s'étendre en regard de chacun des moyens de fixation 6 considéré est alors dimensionné de sorte à permettre l'insertion et le passage dudit moyen de fixation 6, notamment d'une tête de celui-ci. Alternativement et de manière avantageuse, afin de simplifier le transport et la manipulation de l'ensemble d'isolation 1, le moyen de fixation 6 peut être une vis imperdable. L'orifice 43 considéré présente alors, de manière préférentielle, une dimension principale strictement inférieure à celle d'une tête du moyen de fixation 6. Le surmoulage du support 4 est alors réalisé sur la barre d'interconnexion 2 équipée d'un ou plusieurs moyens de fixation de sorte que ceux-ci s'étendent dans un volume délimité par le support 4. Le support 4 forme alors avantageusement un boîtier d'imperdabilité, aussi qualifié de cage d'imperdabilité, c'est-à-dire un espace duquel le ou les moyens de fixation ne peuvent s'échapper.

Selon un deuxième mode de réalisation, non représenté, le support 4 peut être surmoulé sur la barre d'interconnexion 2. Il présente, par exemple, les caractéristiques exposées précédemment et peut, en outre, comprendre une paroi additionnelle, opposée à la paroi principale 41, de sorte à définir un boîtier, clos ou non, entourant la barre d'interconnexion 2, c'est-à-dire s'étendant de part et d'autres de la barre d'interconnexion 2 le long d'au moins une direction. Notamment, l'ensemble d'isolation 1 peut présenter une structure similaire à ce qui a été exposé plus haut en référence au premier mode de réalisation, à la différence que le support 4 et l'embase 8 forment un ensemble au moins en partie monobloc, surmoulé sur la barre d'interconnexion 2 et définissant le boîtier. Par exemple, au moins la paroi principale 41 et l'un des flancs latéraux 82 de l'embase forment un ensemble monobloc surmoulé sur la barre d'interconnexion.

Dans le cas d'un ensemble d'isolation 1 selon le premier mode de réalisation, comprenant l'embase 8 amovible, l'ensemble peut également comprendre un ou des moyen(s) de fixation amovible(s). Similairement à ce qui a été exposé précédemment, l'orifice 43 configuré pour s'étendre en regard de chacun des moyens de fixation 6 considéré peut être dimensionné de sorte à permettre l'insertion et le passage dudit moyen de fixation 6, notamment d'une tête de celui-ci. Alternativement et de manière avantageuse, le moyen de fixation 6 peut être une vis imperdable. L'orifice 43 considéré présente alors, de manière préférentielle, une dimension principale strictement inférieure à celle d'une tête du moyen de fixation 6. Le support 4 et l'embase 8 sont assemblés de manière à entourer la barre d'interconnexion 2 équipée d'un ou plusieurs moyens de fixation de sorte que ceux-ci s'étendent dans un volume délimité par la combinaison du support 4 et de l'embase 8. Une telle combinaison forme alors un boîtier d'imperdabilité tel que décrit plus haut.

L'au moins un capot 5 est une pièce amovible, rapportée sur le support 4. Il est configuré pour être mobile relativement audit support 4, notamment relativement à la paroi principale 41. La description ci-après, faite en référence à un capot 5, peut s'étendre à une pluralité de capots 5 compris dans le dispositif d'isolation 3 selon l'invention.

Le capot 5 est réalisé dans un matériau électriquement isolant, tel qu'un matériau plastique, notamment des polyamides tel que le PA6, par exemple le PA6-GF25. Il comprend un corps 51. Notamment, afin de réduire l'encombrement généré, un tel corps 51 présente un profil de forme complémentaire à au moins une partie du support 4 avec laquelle il coopère. En l'espèce, le corps 51 présente un profil de forme complémentaire à la paroi principale 41. Dans l'exemple illustré, la paroi principale 41 est plane, ou sensiblement plane, et il en va de même pour le corps 51. De la sorte, lorsque le capot 5 est assemblé sur le support 4, une première face 511 du corps 51 du capot 5, tournée vers le support 4, s'étend en contact avec la deuxième face 412 du support 4. Selon une alternative non représentée, lorsque le support 4, notamment la paroi principale 41, présente un profil courbé, le corps 51 du capot 5 présente un profil complémentaire de forme.

Le capot 5 comprend, en outre, au moins un organe de guidage 52. L'organe de guidage 52 est relié au corps 51 et s'étend en saillie de celui-ci le long d'au moins une direction. **Il** est issu de la première face 511 du corps 51 et, lorsque le dispositif d'isolation 3 est assemblé, s'étend vers le support 4. L'organe de guidage 52 est configuré pour coopérer avec la rainure de guidage 44 de sorte à permettre le déplacement du capot 5 relativement au support 4. Particulièrement, l'organe de guidage 52 est configuré pour être inséré dans la rainure de guidage 44 afin de permettre le déplacement du capot 5 par coulissement entre une première position et une deuxième position.

Tel qu'illustré à la figure 1, le corps 51 et le support 4 sont tous deux configurés de sorte que, dans la première position, l'au moins un orifice 43 est dégagé, c'est-à-dire qu'il est accessible de manière à permettre à un utilisateur d'intervenir sur le moyen de fixation 6 disposé en regard de l'orifice 43 considéré. A l'inverse, tel que représenté à la figure 2, 3 ou 4, lorsque le capot 5 est déplacé dans la deuxième position, le corps 51 recouvre l'au moins un orifice 43, le rendant ainsi inaccessible. Le corps 51 est ainsi dimensionné en fonction de la position de l'au moins un orifice 43 et de la rainure de guidage 44 considérés de sorte à recouvrir l'au moins un orifice 43 lorsque la capot 5 est inséré dans la rainure de guidage 44 et disposé dans la deuxième position.

De manière préférentielle, le corps 51 et l'organe de guidage 52 forment un ensemble monobloc, c'est-à-dire qu'ils ne peuvent être dissociés l'un de l'autre sans résulter en la dégradation, voire la destruction, du capot 5. Par exemple, le capot 5 peut être une pièce moulée.

L'organe de guidage 52 présente une forme allongée dont le profil est configuré pour coopérer avec la rainure de guidage 44. De manière optionnelle mais préférentielle, l'organe de guidage 52 comprend un organe de retenue 53 du capot 5 relativement au support 4. L'organe de retenue 53 comprend une portion déformable 53a, notamment élastiquement déformable, configurée pour prévenir le déplacement du capot 5 relativement au support 4 le long d'au moins une direction. En particulier, l'organe de retenue 53 est configuré pour limiter le déplacement du capot 5 relativement au support 4 le long d'un sens de la première direction 100 afin de prévenir la désolidarisation du capot 5.

Tout ou partie de la portion déformable 53a est configurée pour être déformée lors de l'assemblage du capot 5 sur le support 4, depuis une configuration de « repos » vers une configuration « déformée ». Notamment, la portion déformable 53a présente la forme d'une fixation en clip. De manière non limitative, l'organe de retenue 53, particulièrement la portion déformable 53a élastiquement, comprend au moins une languette. En l'espèce, l'organe de retenue 53 comprend deux languettes disposées de sorte à s'inscrire dans un profil en « V », ou sensiblement en « V », dans sa configuration de « repos ». Les languettes sont ainsi inclinées, relativement à la première direction 100 de sorte à venir en butée du support 4 en cas de déplacement le long de la première direction 100 lorsque le capot est dans sa configuration de « repos ».

Pour chaque languette considérée, l'organe de retenue 53 est configuré de sorte que l'extrémité libre de ladite languette s'étend à distance non nul de la première face 511 du corps 51 du capot 5. Ainsi, de manière préférentielle, lorsque le capot 5 coopère avec le support 4, le capot 5 s'étend en prise d'au moins l'une des parois du support 4. De la sorte, tel que davantage exposé ci-après, le capot 5 peut notamment être indirectement, par l'intermédiaire d'au moins le support 4, solidaire de la barre d'interconnexion 2. En l'espèce, le corps 51 du capot 5 d'une part, et l'organe de retenue 53 d'autre part, notamment la portion déformable 53a élastiquement, sont disposés en prise de la paroi principale 41 le long de la première direction 100. Le corps 51 est ainsi en contact avec la deuxième face 412 de la paroi principale 41 tandis que l'extrémité libre d'au moins l'une des languettes est au contact de la première face 411 de la paroi principale 41.

Lors de l'assemblage du capot 5 sur le support 4, des bords de la rainure de guidage 44 exercent un effort sur l'organe de retenue 53, qui se déforme afin de permettre l'insertion de l'organe de guidage 52 dans la rainure de guidage 44. En l'espèce, la portion déformable 53a est déplacée de manière telle que, dans la configuration « déformée », des extrémités libres des languettes se rapprochent l'une de l'autre de manière à permettre le positionnement du capot 5 sur le support 4. Lorsque le corps 51 du capot 5 s'étend au contact du support 4, les bords de la rainure de guidage 44 ne sont plus au contact direct de l'organe de retenue 53. L'effort exercé sur l'organe de retenue 53 cesse, et l'organe de retenue 53 revient de lui-même dans sa configuration de « repos ». Les languettes sont alors aptes à limiter le déplacement du capot 5 relativement au support 4 par contact avec la paroi principale 41 en cas de déplacement du capot 5 le long de la première direction 100, la paroi principale 41 formant butée desdites languettes.

Un principe similaire peut s'appliquer *mutatis mutandis* à un organe de retenue 53 comprenant une unique languette, configurée pour coopérer avec au moins un bord de la rainure de guidage 44, ou plus de deux languettes.

En outre, de manière optionnelle mais préférentielle, l'organe de guidage 52 peut comprendre au moins un organe de positionnement 54 du capot 5 dans au moins l'une de la première ou de la deuxième position. La rainure de guidage 44 comprend alors au moins un élément de positionnement 45 du capot 5 de forme complémentaire dudit organe de positionnement 54, délimitant, ou démarquant, la position considérée dans laquelle doit être disposé le capot 5 relativement au support 4.

Particulièrement, le capot 5 comprend autant d'organes de positionnement 54 que le support 4 comprend d'éléments de positionnement 45. Dans l'exemple de réalisation illustré, l'organe de guidage 52 comprend deux organes de positionnement 54 tandis que le support 4 comprend deux éléments de positionnement 45, particulièrement des retraits. Un premier organe de positionnement 54a et un premier retrait 45a permettent de démarquer la première position, dans laquelle l'au moins un orifice 43 considéré est dégagé lorsque le capot 5 est déplacé de manière à positionner le premier organe 54a dans le premier retrait 45a. A l'inverse un deuxième organe de positionnement 54b et un deuxième retrait 45b permettent de démarquer la deuxième position, dans laquelle l'au moins un orifice 43 considéré est recouvert par le capot 5 lorsque ce dernier est déplacé de manière à positionner le deuxième organe dans le deuxième retrait 45b.

Les organes de positionnement 54 et les éléments de positionnement 45 ont ainsi également fonction d'indexation en ce qu'ils imposent une position et une orientation du capot 5 relativement au support au niveau de la première position et de la deuxième position.

Dans l'exemple illustré, non limitatif, la rainure de guidage 44 comprend une portion intermédiaire 46 droite, s'étendant le long d'un axe principal d'extension orthogonal à la première direction 100. Alternativement, une telle portion intermédiaire 46 peut être courbée, par exemple dans le cas d'une rainure de guidage 44 courbée tel qu'exposé précédemment. Le premier retrait 45a et le deuxième retrait 45b présentent un positionnement extrêmal au sein de la rainure de guidage 44. Ils sont reliés à la portion intermédiaire 46 et s'étendent dans la continuité de celle-ci le long de l'axe principal de sorte que le capot 5 peut être déplacé dans le premier retrait 45a ou le deuxième retrait 45b dans la continuité d'un mouvement de coulissement passant par la portion intermédiaire 46. Autrement dit, la portion intermédiaire 46 correspond ici à des positions intermédiaires du capot 5, comprises entre la première position et la deuxième position. Alternativement, le retrait considéré peut être déporté relativement à la direction définie par l'axe principal, par exemple de manière à s'étendre au-dessus ou en dessous d'un tel axe.

Notamment, au sein de la rainure de guidage 44, les éléments de positionnement 45, c'est-à-dire le premier retrait 45a et/ou le deuxième retrait 45b, peuvent être reliés à la portion intermédiaire 46 par, ou au niveau de, contre-formes d'indexation participant à délimiter la position ouverte ou position fermée. En l'espèce, de telles contre-formes présentent la forme d'une portion de la rainure de de guidage 44 au niveau de laquelle les bords de ladite rainure présentent un rapprochement. De telles contre-formes forment une résistance nécessitant un effort supplémentaire d'un utilisateur pour déplacer le capot 5 dans ou hors de la position considérée, permettant ainsi au capot de rester stable dans ladite position.

Egalement, dans l'exemple illustré, le premier organe de positionnement 54a et le deuxième organe de positionnement 54b présentent, de manière préférentielle une forme arrondie, par exemple sensiblement circulaire, et les retraits présentent une forme complémentaire. Une telle forme a pour but de verrouiller l'indexage du capot 5 en position ouverte ou fermée tel qu'exposé précédemment en complément des formes femelles formées par le premier retrait 45a et/ou le deuxième retrait 45b.

La portion intermédiaire 46 et les éléments de positionnement 45a, 45b sont chacun dimensionnés de manière à permettre le déplacement du capot 5 relativement au support 4. En ce sens, la portion intermédiaire 46 et les éléments de positionnement 45 présentent une largeur strictement supérieure à une largeur des organes de positionnement 54. Les largeurs considérées sont les dimensions définies le long d'une direction orthogonale à la première direction 100, et notamment orthogonales à l'axe principal le long duquel s'étend la rainure de guidage 44.

En outre, de manière préférentielle, les organes de positionnement 54 sont reliés au corps 51 par une structure présentant des parois pleines, à l'inverse de l'organe de retenue 53 illustré, par exemple. Ainsi, de manière optionnelle, les organes de positionnement 54 comprennent au moins une paroi pleine configurée pour être située en regard des bords de la rainure de guidage 44 le long de la première direction 100 lorsque le dispositif d'isolation 3 est assemblé. Notamment, les organes de positionnement 54 s'étendent au moins en partie au contact du support 4 de sorte à permettre un déplacement optimisé du capot 5 relativement au support 4 et prévenir le pivotement du capot 5 dans une direction autre que celle ou celles d'extension de la rainure de guidage 44.

De manière optionnelle, le corps 51 du capot 5 peut avantageusement comprendre au moins un organe de préhension 55 visant à simplifier la manipulation du capot 5. L'organe de préhension 55 peut notamment être disposé sur un côté extrêmal du corps 51. Particulièrement, l'au moins un organe de préhension 55 peut être configuré pour s'étendre en saillie du support 4 le long d'au moins une direction. Dans l'exemple illustré, l'organe de préhension 55 présente la forme de deux protubérances 55a s'étendant en saillie du support 4, notamment de l'une des parois latérales 42, le long d'au moins une direction, par exemple le long d'une troisième direction, orthogonale à la première direction 100 et à la deuxième direction 200.

Selon un autre exemple de réalisation, le capot 5 peut comprendre, additionnellement ou alternativement, un organe de préhension 55 comprenant un grainage, des rainures et/ou des nervures. Un tel organe de préhension 55b peut être disposé sur la face accessible du capot 5 lorsque celui-ci est assemblé dans le dispositif d'isolation 3. En l'espèce, l'organe de préhension 55 considéré comprend des rainures disposées dans la deuxième surface 512 du corps 51 du capot 5.

Le capot 5 peut ainsi optionnellement comprendre une pluralité d'organes de préhension 55 réalisés selon une ou plusieurs des alternatives précitées.

Tel qu'illustré aux figures 1 à 6, le dispositif d'isolation 3 électrique peut comprendre une pluralité de capots 5. De tels capots 5 peuvent être identiques entre eux ou peuvent être réalisés selon différentes alternatives et options exposées précédemment. Le support 4 est alors apte à coopérer avec une pluralité de capots 5. Il comprend une pluralité de rainures de guidage 44 telles qu'exposées précédemment, chacune desdites rainures étant configurée pour coopérer avec l'un des capots 5 de la pluralité de capots 5.

En outre, de manière optionnelle mais préférentielle, le dispositif d'isolation 3 électrique peut comprendre au moins un dispositif de détrompage 7 dans lequel le support 4 comporte une fente de détrompage 71 tandis que le capot 5 comprend un moyen de détrompage 72 configuré et conformé pour coopérer avec une telle fente. Tel qu'illustré aux figures 5 et 10, le moyen de détrompage 72 vise à informer un utilisateur du bon positionnement d'un moyen de fixation 6 défini, tel que davantage détaillé ci-après. Par exemple, le moyen de détrompage 72 vise à définir si le moyen de fixation 6 considéré est ou non serré de manière appropriée pour permettre le maintien de la barre d'interconnexion 2.

La fente de détrompage 71 est comprise dans la paroi comprenant l'au moins un orifice 43. En l'espèce, la fente de détrompage 71 est comprise dans la paroi principale 41 du support 4. La fente de détrompage 71 est traversante dans l'épaisseur du support 4, c'est-à-dire qu'elle s'étend ici de la première face 411 de la paroi principale 41 à la deuxième face 412. La fente de détrompage 71 est configurée pour s'étendre parallèlement, ou sensiblement parallèlement à la rainure de guidage 44. Similairement à ce qui a été exposé précédemment, la fente de détrompage 71 peut être droite ou au moins en partie courbée. Aussi, la fente de détrompage 71 définit une trajectoire de déplacement du capot 5 similaire, ou sensiblement similaire, à une trajectoire définie par la rainure de guidage 44. La fente de détrompage 71 s'étend à distance non nulle de la rainure de guidage 44 et débouche dans l'au moins un orifice 43.

Afin de coopérer avec la fente de détrompage 71, le moyen de détrompage 72 compris dans le capot 5 peut présenter la forme d'un doigt, d'un pion ou d'une languette s'étendant en saillie du corps 51. Le moyen de détrompage 72 et l'organe de guidage 52 s'étendent d'un même côté du corps 51 du capot 5. Le moyen de détrompage 72 est dimensionné pour présenter, le long de la première direction 100, une dimension strictement supérieure à l'épaisseur de la paroi du support 4 comprenant la fente de détrompage 71 de sorte à s'étendre en saillie de ladite paroi lorsque le capot 5 est assemblé sur le support 4. En l'espèce, lorsque le capot 5 est monté sur le support 4, le moyen de détrompage 72 s'étend au travers de la fente de détrompage 71 et en saillie de la première face 411 de la paroi principale 41 du support 4.

Le dispositif de détrompage 7 est ainsi configuré de sorte que, lorsque le capot 5 est déplacé dans la rainure de guidage 44 relativement au support 4, le moyen de détrompage 72 est concomitamment déplacé le long de la fente de détrompage 71. Tel qu'illustré aux figures 5 et 10, du fait du positionnement de la fente de détrompage 71 relativement à l'au moins un orifice 43, le dispositif de détrompage 7 est configuré de sorte que le moyen de détrompage 72 entre en butée du moyen de fixation 6 disposé en regard de l'orifice 43 considéré le long de la première direction 100 lorsque ledit moyen de fixation 6 n'est pas disposé de manière adaptée au maintien de la barre d'interconnexion 2, par exemple pas serré de manière adaptée dans le cas de vis, et que le capot est déplacé vers la deuxième position. En d'autres termes, si le moyen de fixation 6 est dans une position inadaptée, celui-ci est disposé en travers de la trajectoire du moyen de détrompage 72 et empêche celui-ci d'atteindre la deuxième position. Le dispositif de détrompage 7 prévient alors le positionnement du capot dans la deuxième position et permet ainsi de prévenir une installation incorrecte de la barre d'interconnexion 2.

Le dispositif d'isolation 3 peut, de manière avantageuse, comprendre une pluralité de dispositifs de détrompage 7 tels qu'exposés plus haut. Notamment, le dispositif d'isolation 3 peut être configuré de sorte que chaque orifice 43 qu'il comprend est relié à une fente de détrompage 71 propre à un dispositif de détrompage 7.

Selon une autre option de réalisation, le dispositif d'isolation 3 peut, en outre, comprendre un marquage disposé sur le support 4 et indicatif d'un positionnement adapté ou non de l'au moins un capot 5. Le marquage est disposé sur une paroi du support 4 visible par un utilisateur, par exemple, dans l'exemple illustré, sur la paroi principale 41. Selon un exemple de réalisation, ledit marquage peut être lettré et/ou en couleur, par exemple afin d'indiquer le terme « OK » pour un positionnement du capot 5 adapté, c'est-à-dire un positionnement dans lequel le dispositif ou l'ensemble d'isolation 1 est prêt à l'usage. Le dispositif d'isolation 3 est configuré de sorte que le capot 5 recouvre au moins en partie ledit marquage selon qu'il est dans la première position ou la deuxième position. Par exemple, lorsque le capot 5 est dans la première position et que l'au moins un orifice 43, et donc éventuellement le moyen de fixation 6 disposé en regard de celui-ci, est visible, une portion du marquage représentative du positionnement inadapté du capot 5 est visible. Une telle partie du marquage peut, par exemple, être un marquage rouge et/ou du type « Not OK » ou « NOK ». A l'inverse, lorsque le capot 5 est dans la deuxième position, il recouvre l'au moins un orifice 43 et une partie du marquage représentative du bon positionnement du capot 5 peut être visible. Par exemple une telle partie du marquage peut être un marquage vert et/ ou du type « OK ».

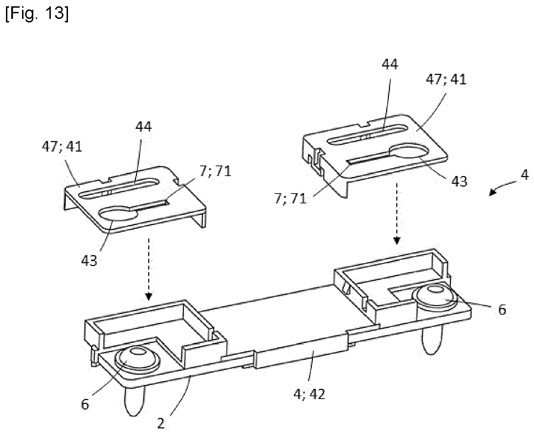

Selon encore une autre option de réalisation, illustrée à la figure 13 et pouvant être appliquée au premier mode de réalisation ou au deuxième mode de réalisation tels qu'exposés plus haut, le support 4 peut comprendre au moins une portion amovible 47 rapportée, configurée pour être fixée sur au moins une paroi du support, par exemple sur une partie de la paroi principale 41 et/ou sur au moins l'une des parois latérales 42. Ladite portion amovible 47 peut, selon un exemple de réalisation préférentiel, être fixée sur la paroi considérée par l'intermédiaire d'un élément de fixation tel qu'un clip. La portion amovible 47 comprend l'au moins un orifice 43 et la rainure de guidage 44 du capot 5 tels que décrits précédemment. La portion amovible 47 est ainsi configurée pour coopérer avec le capot 5. La portion amovible 47 et l'au moins une paroi sur laquelle cette dernière est fixée participent ainsi à délimiter un espace configuré pour recevoir au moins en partie le moyen de fixation 6. Egalement, de manière optionnelle, la portion amovible peut comprendre le dispositif de détrompage 7. La portion amovible 47 peut être configurée de sorte à former la paroi principale 41 ou de sorte à s'inscrire dans un plan commun avec ladite paroi principale 41. Le support 4 peut, en outre, comprendre une pluralité de portions amovibles 47, chacune étant configurée pour coopérer avec un capot 5 distinct.

La présente invention peut, en outre, s'étendre à un capot 5 pour un dispositif ou un ensemble d'isolation 1 d'une barre d'interconnexion 2 selon l'invention. Ledit capot 5 peut reprendre tout ou partie des caractéristiques exposées plus haut en référence au capot 5. Notamment, de manière générale, un tel capot 5 est réalisé dans un matériau isolant, comprend un corps 51, notamment plan ou sensiblement plan, et au moins un organe de guidage 52 relié au corps 51 et s'étendant en saillie de celui-ci, l'organe de guidage 52 étant configuré pour coopérer et être déplacé relativement à un support 4.

L'invention concerne, enfin, un procédé d'installation d'un ensemble d'isolation 1 électrique selon l'invention. Un tel procédé comprend le positionnement de la barre d'interconnexion 2 sur un module de dispositif de stockage d'énergie électrique et le positionnement d'au moins un moyen de fixation 6 de sorte à fixer la barre d'interconnexion 2 sur ledit module. Notamment, dans le cas d'un moyen de fixation 6 tel qu'une vis, le positionnement dudit moyen de fixation 6 est réalisé par vissage ou serrage. Un tel positionnement peut être réalisé par l'intermédiaire d'un outil, lequel est positionné de sorte à s'étendre au moins en partie au travers de l'orifice 43 compris dans le support 4 s'étendant en regard du moyen de fixation 6 considéré. Le positionnement du moyen de fixation 6 est mis en œuvre lorsque le capot 5 considéré, c'est-à-dire configuré pour s'étendre en regard de l'orifice 43 considéré, est disposé dans la première position, de sorte à rendre ledit orifice 43 accessible à un utilisateur. Le procédé selon l'invention comprend, ensuite, lorsque le moyen de fixation 6 est positionné de manière adaptée, le déplacement de l'au moins un capot 5 depuis la première position vers la deuxième position par coulissement relativement au support 4. Par exemple, un tel coulissement est réalisé selon un mouvement de translation, notamment le long d'une deuxième direction 200, orthogonale à la première direction 100.

De manière optionnelle, le procédé selon l'invention peut comprendre une sous-étape de vérification du bon positionnement du moyen de fixation 6, par l'intermédiaire d'un dispositif de détrompage 7 et/ou d'un marquage tel qu'exposé précédemment.

La présente invention propose ainsi un dispositif d'isolation électrique pour barre d'interconnexion, notamment une barre d'interconnexion configurée pour relier entre eux différents modules d'un dispositif de stockage d'énergie électrique, par exemple pour un véhicule électrique ou hybride. Le dispositif selon l'invention est avantageusement configuré pour assurer la sécurité d'un utilisateur tout en permettant un montage simple et en étant adapté à des environnements encombrés.

## Revendications

1. Dispositif d'isolation (3) électrique pour barre d'interconnexion (2) **caractérisé en ce qu'**il comprend un support (4) en matériau électriquement isolant configuré pour recouvrir une barre d'interconnexion (2) et au moins un capot (5) électriquement isolant, amovible, rapporté sur le support (4) :
- le support (4) comprenant au moins un orifice (43), apte à s'étendre en regard d'au moins un moyen de fixation (6) d'une barre d'interconnexion (2), et une rainure de guidage (44) de l'au moins un capot (5) ;
- l'au moins un capot (5) comprenant un corps (51) et étant monté coulissant sur le support (4) par l'intermédiaire d'au moins un organe de guidage (52), relié au corps (51), de sorte à pouvoir être déplacé dans la rainure de guidage (44) entre une première position, dans laquelle l'au moins un orifice (43) est dégagé, et une deuxième position dans laquelle l'au moins un orifice (43) est recouvert par le corps (51).

2. Dispositif d'isolation (3) selon la revendication précédente, dans lequel l'organe de guidage (52) comprend :
- un organe de retenue (53) du capot (5) relativement au support (4), l'organe de retenue (53) comprenant une portion déformable (53a), notamment en clip, configurée pour coopérer avec au moins un bord de la rainure de guidage (44) de sorte à prévenir le déplacement du capot (5) relativement au support (4) le long d'au moins une direction ; et/ou
- au moins un organe de positionnement (54) du capot (5) dans au moins l'une de la première ou de la deuxième position, la rainure de guidage (44) comprenant au moins un élément de positionnement (45), tel qu'un retrait, de forme complémentaire dudit organe de positionnement (54), délimitant ladite position.

3. Dispositif d'isolation (3) selon l'une des revendications précédentes, dans lequel le corps (51) de l'au moins un capot (5) comprend un organe de préhension (55, 55a), disposé sur un côté extrémal du corps (51) et configuré pour s'étendre en saillie du support (4) le long d'au moins une direction.

4. Dispositif d'isolation (3) selon l'une des revendications précédentes, comprenant une pluralité de capots (5), le support (4) comprenant une pluralité de rainures de guidage (44), chacune desdites rainures étant configurée pour coopérer avec l'un des capots (5) de la pluralité de capots (5).

5. Dispositif d'isolation (3) selon l'une des revendications précédentes, dans lequel le support (4) comprend au moins une paroi (41, 42) et au moins une portion amovible (47) rapportée, configurée pour être fixée sur l'au moins une paroi (41, 42), ladite portion amovible (47) comprenant l'au moins un orifice (43) et la rainure de guidage (44) de l'au moins un capot (5).

6. Dispositif d'isolation (3) selon l'une des revendications précédentes, dans lequel le support (4) comprend une fente de détrompage (71), traversante dans une épaisseur du support (4) et débouchant dans l'au moins un orifice (43), le capot (5) comprenant un moyen de détrompage (72) s'étendant en saillie du corps (51) et configuré pour coopérer avec la fente de détrompage (71) de sorte à s'étendre au travers de celle-ci et en saillie du support (4).

7. Ensemble d'isolation (1) électrique pour une barre d'interconnexion (2) comprenant un dispositif d'isolation (3) selon l'une des revendications précédentes et une barre d'interconnexion (2).

8. Ensemble d'isolation (1) électrique selon la revendication précédente, comprenant, en outre, au moins un moyen de fixation (6), disposé en regard de l'au moins un orifice (43) et monté sur la barre d'interconnexion (2), le moyen de fixation (6) étant une vis imperdable.

9. Ensemble d'isolation (1) électrique selon la revendication 7 ou 8, dans lequel :
- le support (4) est surmoulé sur la barre d'interconnexion (2) ; ou
- l'ensemble d'isolation (1) comprend, en outre, une embase (8) électriquement isolante configurée pour coopérer avec le support (4), l'embase (8) s'étendant au moins d'un côté de la barre d'interconnexion (2) et le support (4) s'étendant au moins d'un côté opposé de la barre d'interconnexion (2) relativement à l'embase (8).

10. Procédé d'installation d'un ensemble d'isolation (1) électrique selon la revendication 7 à 9 comprenant le positionnement de la barre d'interconnexion (2) sur un module de dispositif de stockage d'énergie électrique, le positionnement d'au moins un moyen de fixation (6) de sorte à fixer la barre d'interconnexion (2) sur ledit module et le déplacement de l'au moins un capot (5) depuis la première position vers la deuxième position par coulissement relativement au support (4).

## Patentansprüche

1. Elektrische Isolierungsvorrichtung (3) für eine Sammelschiene (2), **dadurch gekennzeichnet, dass** sie einen Träger (4) aus elektrisch isolierendem Material, der dazu konfiguriert ist, eine Sammelschiene (2) abzudecken, und mindestens eine elektrisch isolierende Abdeckung (5), die abnehmbar ist und an den Träger (4) angefügt ist, umfasst:
- wobei der Träger (4) mindestens eine Öffnung (43), die geeignet ist, sich gegenüber mindestens einem Befestigungsmittel (6) einer Sammelschiene (2) zu erstrecken, und eine Führungsnut (44) für die mindestens eine Abdeckung (5) umfasst;
- wobei die mindestens eine Abdeckung (5) einen Körper (51) umfasst und mittels mindestens eines Führungsorgans (52), das mit dem Körper (51) verbunden ist, verschiebbar an dem Träger (4) montiert ist, um in der Führungsnut (44) zwischen einer ersten Position, in der die mindestens eine Öffnung (43) freigelegt ist, und einer zweiten Position, in der die mindestens eine Öffnung (43) von dem Körper (51) bedeckt ist, bewegbar zu sein.

2. Isolierungsvorrichtung (3) nach dem vorhergehenden Anspruch, wobei das Führungsorgan (52) Folgendes umfasst:
- ein Organ zum Halten (53) der Abdeckung (5) relativ zu dem Träger (4), wobei das Halteorgan (53) einen verformbaren Teil (53a), insbesondere in Form eines Clips, umfasst, der dazu konfiguriert ist, mit mindestens einem Rand der Führungsnut (44) zusammenzuwirken, um die Bewegung der Abdeckung (5) relativ zu dem Träger (4) entlang mindestens einer Richtung zu verhindern; und/oder
- mindestens ein Organ zum Positionieren (54) der Abdeckung (5) in mindestens einer von der ersten oder der zweiten Position, wobei die Führungsnut (44) mindestens ein Positionierungselement (45), wie etwa eine Aussparung, umfasst, das eine zu dem Positionierungsorgan (54) komplementäre Form aufweist und die Position begrenzt.

3. Isolierungsvorrichtung (3) nach einem der vorhergehenden Ansprüche, wobei der Körper (51) der mindestens einen Abdeckung (5) ein Greiforgan (55, 55a) umfasst, das auf einer Extremalseite des Körpers (51) angeordnet ist und dazu konfiguriert ist, sich entlang mindestens einer Richtung von dem Körper (4) vorstehend zu erstrecken.

4. Isolierungsvorrichtung (3) nach einem der vorhergehenden Ansprüche, die eine Vielzahl von Abdeckungen (5) umfasst, wobei der Träger (4) eine Vielzahl von Führungsnuten (44) umfasst, wobei jede der Nuten dazu konfiguriert ist, mit einer der Abdeckungen (5) der Vielzahl von Abdeckungen (5) zusammenzuwirken.

5. Isolierungsvorrichtung (3) nach einem der vorhergehenden Ansprüche, wobei der Träger (4) mindestens eine Wand (41, 42) und mindestens einen angefügten abnehmbaren Teil (47), der dazu konfiguriert ist, an der mindestens einen Wand (41, 42) befestigt zu werden, umfasst, wobei der abnehmbare Teil (47) die mindestens eine Öffnung (43) und die Führungsnut (44) für die mindestens eine Abdeckung (5) umfasst.

6. Isolierungsvorrichtung (3) nach einem der vorhergehenden Ansprüche, wobei der Träger (4) einen Unverwechselbarkeitsschlitz (71) umfasst, der durch eine Dicke des Trägers (4) hindurchgeht und in der mindestens einen Öffnung (43) mündet, wobei die Abdeckung (5) ein Unverwechselbarkeitsmittel (72) umfasst, das sich von dem Körper (51) vorstehend erstreckt und dazu konfiguriert ist, mit dem Unverwechselbarkeitsschlitz (71) zusammenzuwirken, um sich durch diesen hindurch und von dem Träger (4) vorstehend zu erstrecken.

7. Elektrische Isolierungsanordnung (1) für eine Sammelschiene (2), die eine Isolierungsvorrichtung (3) nach einem der vorhergehenden Ansprüche und eine Sammelschiene (2) umfasst.

8. Elektrische Isolierungsanordnung (1) nach dem vorhergehenden Anspruch, die ferner mindestens ein Befestigungsmittel (6) umfasst, das gegenüber der mindestens einen Öffnung (43) angeordnet ist und an der Sammelschiene (2) montiert ist, wobei das Befestigungsmittel (6) eine unverlierbare Schraube ist.

9. Elektrische Isolierungsanordnung (1) nach Anspruch 7 oder 8, wobei:
- der Träger (4) auf die Sammelschiene (2) aufgeformt ist; oder
- die Isolierungsanordnung (1) ferner eine elektrisch isolierende Basis (8) umfasst, die dazu konfiguriert ist, mit dem Träger (4) zusammenzuwirken, wobei sich die Basis (8) mindestens auf einer Seite der Sammelschiene (2) erstreckt und sich der Träger (4) mindestens auf einer relativ zu der Basis (8) entgegengesetzten Seite der Sammelschiene (2) erstreckt.

10. Installationsverfahren für eine elektrische Isolierungsanordnung (1) nach Anspruch 7 bis 9, umfassend das Positionieren der Sammelschiene (2) an einem Modul einer Vorrichtung zur Speicherung elektrischer Energie, das Positionieren mindestens eines Befestigungsmittels (6), um die Sammelschiene (2) an dem Modul zu befestigen, und das Bewegen der mindestens einen Abdeckung (5) von der ersten Position in die zweite Position durch ein Verschieben relativ zu dem Träger (4).

## Claims

1. Electrical insulation device (3) for a busbar (2), **characterized in that** it comprises a support (4) made of an electrically insulating material configured to cover a busbar (2) and at least one removable electrically insulating cover (5) attached to the support (4):
- the support (4) comprising at least one orifice (43), able to extend facing at least one fixing means (6) for fixing a busbar (2), and a guide slot (44) for guiding the at least one cover (5);
- the at least one cover (5) comprising a body (51) and being slidably mounted on the support (4) via at least one guide member (52), connected to the body (51), so as to be able to be moved in the guide slot (44) between a first position in which the at least one orifice (43) is uncovered, and a second position in which the at least one orifice (43) is covered by the body (51).

2. Insulation device (3) according to the preceding claim, wherein the guide member (52) comprises:
- a retaining member (53) for retaining the cover (5) relative to the support (4), the retaining member (53) comprising a deformable portion (53a), notably in the form of a clip, configured to collaborate with at least one edge of the guide slot (44) so as to prevent the cover (5) from moving relative to the support (4) in at least one direction; and/or
- at least one positioning member (54) for positioning the cover (5) in at least one of either the first or the second positions, the guide slot (44) comprising at least one positioning element (45), such as a recess, having a shape that complements that of said positioning member (54), delimiting said position.

3. Insulation device (3) according to one of the preceding claims, wherein the body (51) of the at least one cover (5) comprises a grasp-promoting member (55, 55a), arranged on an end side of the body (51) and configured to extend as a projection from the support (4) in at least one direction.

4. Insulation device (3) according to one of the preceding claims, comprising a plurality of covers (5), the support (4) comprising a plurality of guide slots (44), each of said slots being configured to collaborate with one of the covers (5) of the plurality of covers (5).

5. Insulation device (3) according to one of the preceding claims, wherein the support (4) comprises at least one wall (41, 42) and at least one attached removable portion (47) configured to be fixed on the at least one wall (41, 42), said removable portion (47) comprising the at least one orifice (43) and the guide slot (44) for guiding the at least one cover (5).

6. Insulation device (3) according to one of the preceding claims, wherein the support (4) comprises a poka-yoke slit (71) passing through the thickness of the support (4) and opening into the at least one orifice (43), the cover (5) comprising a poka-yoke means (72) projecting out from the body (51) and configured to collaborate with the poka-yoke slit (71) so as to extend through the latter and project from the support (4).

7. Electrical insulation assembly (1) for a busbar (2) comprising an insulation device (3) according to one of the preceding claims and a busbar (2).

8. Electrical insulation assembly (1) according to the preceding claim, further comprising at least one fixing means (6) arranged facing the at least one orifice (43) and mounted on the busbar (2), the fixing means (6) being a captive screw.

9. Electrical insulation assembly (1) according to Claim 7 or 8, wherein:
- the support (4) is overmoulded on the busbar (2); or
- the insulation assembly (1) further comprises an electrically insulating baseplate (8) configured to collaborate with the support (4), the baseplate (8) extending at least on one side of the busbar (2) and the support (4) extending at least on an opposite side of the busbar (2) relative to the baseplate (8).

10. Method for installing an electrical insulation assembly (1) according to Claims 7 to 9 comprising positioning the busbar (2) on a module of the electrical energy storage device, positioning at least one fixing means (6) so as to fix the busbar (2) to said module, and moving the at least one cover (5) from the first position to the second position by sliding relative to the support (4).
